# EUROPÄISCHE PATENTANMELDUNG

(11) **EP 0 949 140 A2**
(43) Veröffentlichungstag der Anmeldung: **13.10.1999**
(21) Anmeldenummer: 99106601.0
(22) Anmeldetag: 31.03.1999
(51) Int. Cl.: B62K 27/00

(54) **Zweirad-Fahrzeug mit Seitenwagen**

(30) Priorität: 09.04.1998 DE 19816048
(71) Anmelder: Kaspar, Lothar, 92345 Dietfurt a.d. Altmühl (DE)
(72) Erfinder: Kaspar, Lothar, 92345 Dietfurt a.d. Altmühl (DE)
(74) Vertreter: Neubauer, Hans-Jürgen, Dipl.-Phys.

(57) **Zusammenfassung**

Die Erfindung betrifft ein Zweirad-Fahrzeug mit Seitenwagen, insbesondere ein Fahrrad mit Seitenwagen, bei dem der Seitenwagen [2] mit dem Zweirad-Rahmen [3] über eine im wesentlichen in Fahrzeuglängsrichtung verlaufende Schwenkachse [15] schwenkbar verbunden ist. Erfindungsgemäß liegt die Schwenkachse [15] an der dem Stützrad [10] gegenüberliegenden Zweirad-Fahrzeugseite. Damit ergeben sich Vorteile für die Beherrschbarkeit und die Fahrzeugsicherheit des Gespanns. Weiter werden vorteilhafte Winkellagen der Schwenkachse [15] angegeben.

## Beschreibung

Die Erfindung betrifft ein Zweirad-Fahrzeug mit Seitenwagen, insbesondere ein Fahrrad mit Seitenwagen nach dem Oberbegriff des Anspruchs 1.

Ein bekanntes, gattungsgemäßes Zweirad-Fahrzeug mit Seitenwagen als Fahrrad mit Seitenwagen [DE 80 00 692 U1] besteht aus einem Zweirad-Rahmen mit einem Vorderrad und Hinterrad, die in einer ersten Spur laufen, wovon das Vorderrad lenkbar ist. Der Seitenwagen besteht aus einem Seitenwagen-Rahmen, an dem ein in einer zweiten Spur auf einer Stützradachse laufendes Stützrad angebracht ist. Der Seitenwagen-Rahmen ist mit dem Zweirad-Rahmen über eine in Fahrzeuglängsrichtung verlaufende Schwenkachse schwenkbar verbunden. Die Schwenkachse liegt hier auf der Seitenwagenseite bzw. auf der Fahrradseite, auf der der Seitenwagen mit seinem Stützrad läuft.

Durch eine solche schwenkbare Verbindung zwischen dem Zweirad-Rahmen und dem Seitenwagen-Rahmen wird eine Zwangskopplung dergestalt erreicht, daß in Kurvenfahrten das Zweirad-Fahrzeug seitlich geneigt werden kann, wodurch ein verbessertes Fahrgefühl gegenüber einer Anordnung mit einer starten Verbindung zwischen dem Zweirad-Rahmen und dem Seitenwagen-Rahmen erreicht werden soll.

Bei einer Kurvenfahrt in die Seitenwagenrichtung wird durch die Zweiradneigung die Lage der Schwenkachse abgesenkt und bei einer Kurvenfahrt entgegen der Seitenwagenrichtung angehoben. Dadurch werden im Seitenwagen transportierte Gegenstände oder eine mitfahrende Person, beispielsweise ein Kleinkind, zwangsweise aus der Kurve hinaus geneigt, so daß ungünstig starke Fliehkräfte auftreten.

Zudem wird das Stützrad zwangsgekoppelt bei Kurvenfahrten in die entgegengesetzte Richtung zur Hinterradneigung des Zweirad-Fahrzeugs geneigt. Dadurch würden das Hinterrad des Zweirad-Fahrzeugs und das Stützrad ohne die gegenseitige Verbindung um zwei weit zueinander versetzte Kurvenmittelpunkte laufen, was durch die tatsächliche Verbindung zu erheblichen Zwangskräften bei Kurvenfahrten führt. Somit ist hier ein unangenehmes, gewöhnungsbedürftiges Fahrgefühl sowohl für den Zweiradlenker als auch für eine Person im Seitenwagen gegeben, wobei zudem die Beherrschbarkeit des Gespanns und die Fahrsicherheit negativ beeinflußt sind.

Zudem sind Gespanne aus einem Zweirad-Fahrzeug mit Seitenwagen bekannt, bei denen das kurvenneigbare Zweirad-Fahrzeug mit einem ebenfalls kurvenneigbaren Stützrad des Seitenwagens für eine gleichgerichtete Neigung mittels Gelenkhebeln zwangsgekoppelt ist. Auch hier liegen die für eine Anlenkung erforderlichen Schwenkachsen am Zweirad-Fahrzeug auf der Seite des Seitenwagens [FR 811 524; US 1 235 177], so daß die o. g. Nachteile auftreten. Es ist auch bekannt, die Schwenkachsen im wesentlichen lenkneutral in den Radmittenebenen anzuordnen [FR 919 426; FR 821 313], wodurch die o. g. Nachteile nur wenig reduziert sind.

Aufgabe der Erfindung ist es, ein gattungsgemäßes Zweirad-Fahrzeug mit einem Seitenwagen so weiterzubilden, daß bei einem guten Fahrgefühl die Fahrsicherheit erhöht ist.

Diese Aufgabe wird mit den Merkmalen des Anspruchs 1 gelöst.

Gemäß Anspruch 1 ist ein gattungsgemäßes Zweirad-Fahrzeug mit Seitenwagen mit einer Schwenkachse ausgerüstet, die an der dem Stützrad gegenüberliegenden Zweirad-Fahrzeugseite vorzugsweise im Höhenbereich der Hinterradachse liegt. Mit anderen Worten ist die Schwenkachse auf der nicht zum Seitenwagen hin liegenden Zweirad-Fahrzeugseite mit einem seitlichen Abstand zu der Radmittenebene angeordnet.

Damit wird erreicht, daß bei einer Kurvenfahrt in Richtung der Seitenwagenseite die Schwenkachse bei einer Schrägstellung des Zweirad-Fahrzeugs angehoben wird, so daß der Beiwagen insgesamt in Richtung der Kurve geneigt wird und Fliehkräfte für Personen, insbesondere für Kinder, oder auch für Gegenstände vorteilhaft reduziert werden. Bei einer Kurvenfahrt in die andere Richtung entgegen der Seitenwagenseite ergeben sich vorteilhaft entgegengesetzte Neigungsstellungen und Kurvenlagen.

Zudem wird durch die Anhebung bzw. Absenkung der Schwenkachse bei Kurvenfahrten das Stützrad entsprechend der Neigungsrichtung des Zweirad-Fahrzeugs ebenfalls etwas geneigt. Dadurch erfolgt eine Angleichung der Mittelpunktlagen der insbesondere vom Hinterrad des Zweirad-Fahrzeugs und dem Stützrad gefahrenen Kurvenbögen. Somit werden bei Kurvenfahrten auftretende Zwangskräfte auf einfache Weise reduziert, so daß das Gespann bei guter Fahrsicherheit einfacher beherrschbar wird und ein angenehmes Fahrgefühl für den Zweiradlenker und ggf. eine Person im Seitenwagen vermittelt.

In einer vorteilhaften Weiterbildung nach Anspruch 2 wird vorgeschlagen, die Schwenkachse in einer Draufsicht um einen ersten Winkel [β] nach hinten seitlich außen gegenüber der Fahrzeuglängsrichtung schrägzustellen. Mit dieser Maßnahme wird erreicht, daß der hintere Schwenkachsenbereich relativ weit seitlich außen von der Zweirad-Fahrzeug-Längsvertikalebene versetzt liegt. Dadurch erfolgt bei Kurvenfahrten mit schräggestelltem Zweirad-Fahrzeug eine vorteilhaft große Anhebung bzw. Absenkung der Schwenkachse, so daß die vorstehend genannten Vorteile verstärkt auftreten. Dies ist jedenfalls dann gegeben, wenn der Winkel [β] nicht zu groß gewählt wird und übliche Neigungswinkel bei Zweirad-Fahrzeugen etwa im Bereich von maximal ± 30° [üblicher Freigangwinkel für Pedale und Anbauteile] betrachtet werden. Erst bei einem relativ großen Neigungswinkel wird der o. g. positive Effekt neutralisiert und kehrt sich bei einem noch größeren Neigungswinkel [größer 45°, wird im praktischen Fahrbetrieb nicht erreicht] um. Anhand der konkreten geometrischen und kinematischen Gegebenheiten kann einfach ein geeigneter Winkel [β] ermittelt werden, der die o. g. Vorteile bewirkt.

In einer weiteren bevorzugten Ausgestaltung nach Anspruch 3 wird vorgeschlagen, die Schwenkachse in einer Seitenansicht um einen zweiten Winkel [α] nach hinten unten gegenüber einer Horizontalebene schrägzustellen. Dieser zweite Winkel [α] ist besonders vorteilhaft zusammen mit dem ersten Winkel [β] kombinierbar.

Durch den zweiten Winkel [α] wird bei einer Kurvenfahrt nach beiden Richtungen jeweils selbsttätig ein lagerichtiger Vorhaltewinkel für das Stützrad eingestellt. Damit werden weiter Zwangskräfte bei Kurvenfahrten reduziert, da die Mittelpunktlagen der Kurvenbögen des Hinterrads des Zweirad-Fahrzeugs und des Stützrads weiter angeglichen werden. Auch hier ist eine geeignete Winkelgröße des Winkels [α] insbesondere auch in Verbindung mit einem Winkel [β] bei konkreten geometrischen und kinematischen Gegebenheiten einfach zu ermitteln.

Weitere Erläuterungen zu den Wirkungen der Winkel [α] und [β] werden in Verbindung mit der Beschreibung eines Ausführungsbeispiels und den zugeordneten Figuren weiter unten gegeben.

Mit den Merkmalen des Anspruchs 4 wird ein Zweirad-Fahrzeug mit einem Seitenrahmen beansprucht, bei dem auch das Stützrand mit seiner Stützradachse schwenkbar am Seitenwagen-Rahmen gehalten und über eine Neigungskoppeleinrichtung mit dem Zweirad-Fahrzeug verbunden ist. Als Kraftübertragungsmittel können in der Neigungskoppeleinrichtung vorteilhaft wenigstens ein Seilzug oder zwei Gelenkhebel in der Art eines Viergelenks verwendet werden. Auch bei einer solchen Anordnung treten die o. g. Vorteile auf, wenn eine zweiradseitige Schwenkachse an der dem Stützrad gegenüberliegenden Zweirad-Fahrzeugseite angebracht ist und diese ggf. zudem die Schrägstellungen entsprechend der Winkel [α] und/oder [β] aufweist.

Mit den Merkmalen des Anspruchs 5 wird eine konkrete Ausbildung des Seitenwagen-Rahmens mit einer U-Grundstruktur angegeben. Damit ist ein Seitenwagen einfach und kostengünstig bei guter Funktion herstellbar. Ein solcher Seitenwagen-Rahmen kann insbesondere eine Basis für eine Transportfläche oder vorzugsweise für ein Kinderabteil bilden.

Die beschriebene Gespannanordnung eignet sich grundsätzlich für alle Zweirad-Fahrzeuge mit Seitenwagen. Gemäß Anspruch 6 wird jedoch ein bevorzugter Einsatz in Verbindung mit Fahrrädern gesehen. Auch leichtmotorisierte Fahrräder mit Hilfsmotor, Mofas, etc. sind geeignet, wogegen die Anordnung in Verbindung mit stärker motorisierten Motorrädern weniger in Frage kommt.

Nach Anspruch 7 ist die Halterung für den Verbindungslängsträger einfach und kostengünstig durch eine mit dem Zweirad-Rahmen ständig und fest verbundene Rohraufnahme herstellbar, in die das freie Ende des Verbindungslängsträgers mittels eines Rastverschlusses lösbar eingesteckt werden kann. Damit kann konstruktiv einfach zugleich mit der Halterung die Schwenkachse in der Halterung ausgebildet werden. Grundsätzlich sind jedoch auch andere Anordnungen, insbesondere eine getrennte Steckverbindung und getrennte Schwenklagerung, möglich.

Das Stützrad kann gemäß Anspruch 8 in üblicher Weise in einem Halterahmen angebracht sein.

Besonders günstige Größenverhältnisse in Verbindung mit stabilen Fahreigenschaften ergeben sich gemäß Anspruch 9, wenn das Stützrad kleiner, vorzugsweise etwa 2/3 so groß wie das Hinterrad ist. Bei einer lösbaren Befestigung des Verbindungsquerträgers in der Höhe der Hinterradachse, wobei dort ggf. die Achsbefestigung mitverwendet werden kann, ist der Basisquerträger im Bereich des Hinterrads nach unten auf Stützradachshöhe abzukröpfen.

In einer weiteren Ausgestaltung nach Anspruch 10 wird ein hochklappbarer Seitenwagen vorgeschlagen, der bei Nichtbenutzung in dieser Position arretiert werden kann, so daß dann das Zweirad-Fahrzeug in üblicher Weise benutzbar ist oder ggf. platzsparend zusammen mit dem Seitenwagen abgestellt werden kann.

Anhand einer Zeichnung werden Ausführungsbeispiele der Erfindung näher erläutert.

Es zeigen:
- Fig. 1: eine schematische Ansicht einer ersten Ausführungsform eines Gespanns aus einem Fahrrad und einem Seitenwagen von hinten in einer aufrechten Grundstellung,
- Fig. 2: eine Draufsicht auf die erste Ausführungsform nach Fig. 1 [mit abgenommenem Kinderabteil und ohne Bauteile der Neigungskoppeleinrichtung],
- Fig. 3: eine schematische Ansicht einer zweiten Ausführungsform eines Gespanns aus einem Fahrrad und einem Seitenwagen von hinten in einer aufrechten Grundstellung,
- Fig. 4: eine Draufsicht auf die zweite Ausführungsform nach Fig. 3,
- Fig. 5: eine Ansicht des Gespanns gemäß Fig. 3 in einer geneigten Kurvenfahrtposition,
- Fig. 6: eine der Fig. 5 entsprechende Draufsicht mit eingezeichneten Kurvenradien,
- Fig. 7: eine Seitenteilansicht im Bereich einer Halterung mit schräggestellter Schwenkachse, und
- Fig. 8: eine Draufsicht zur Verdeutlichung der Funktion der Schwenkachsenschrägstellung gemäß Fig. 7.

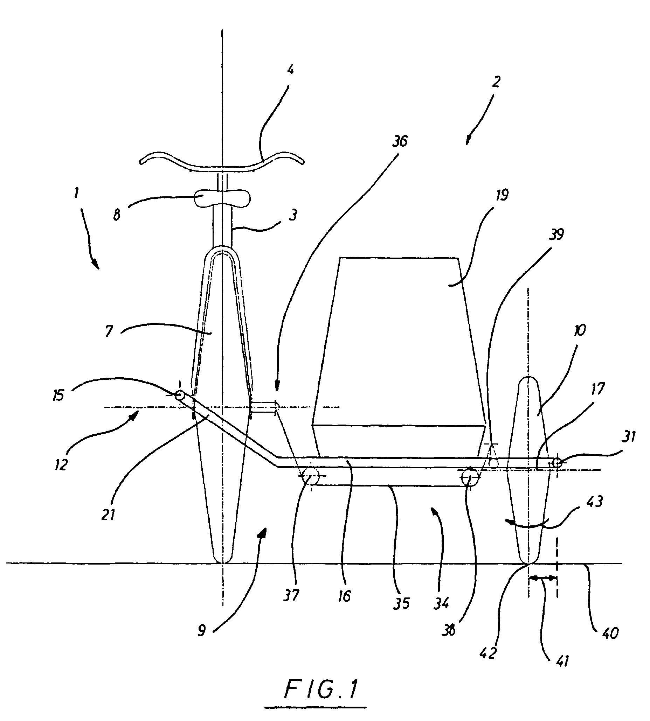

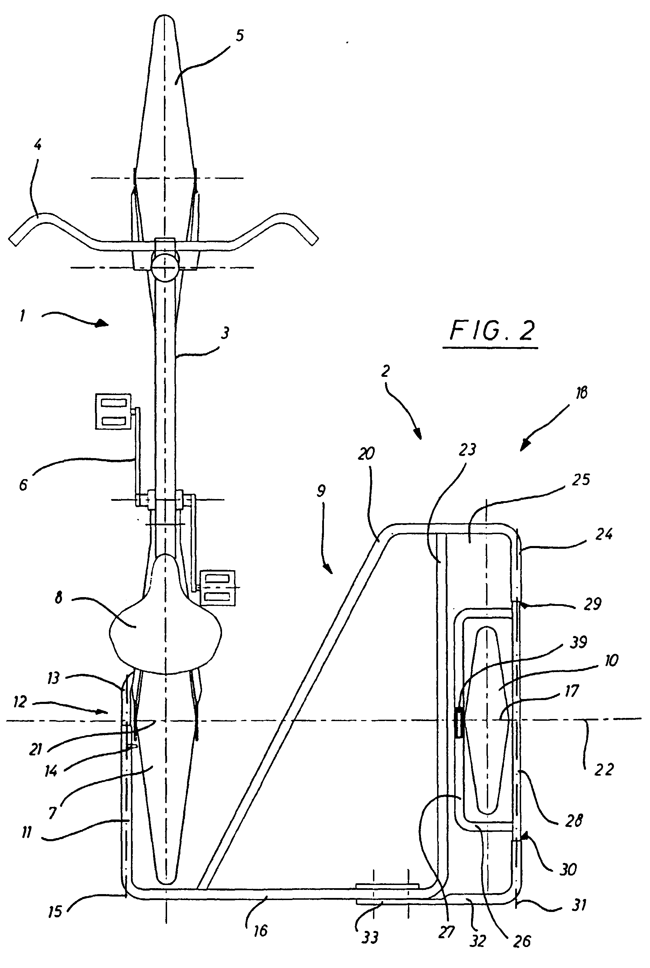

In den Fig. 1 und 2 ist eine erste Ausführungsform eines Gespanns aus einem Fahrrad 1 und einem Seitenwagen 2 dargestellt. Das Fahrrad 1 besteht in üblicher Weise aus einem Fahrradrahmen 3, einem mit einer Lenkstange 4 lenkbaren Vorderrad 5, einem über eine Pedalerie 6 antreibbaren Hinterrad 7 und einem Fahrradsitz 8 für einen Gespannlenker.

Der Seitenwagen besteht aus einem Seitenwagen-Rahmen 9, der mit dem Fahrradrahmen 3 verbunden ist und an dem ein seitenwagenäußeres Stützrad 10 angebracht ist. Der Seitenwagen-Rahmen 9 hat in der Draufsicht von oben [Fig. 2] in der Grundstruktur eine U-Rahmenform. Ein U-Rahmenschenkel ist als Verbindungslängsträger 11 ausgebildet und nach vorne in Fahrradlängsrichtung gerichtet. Mit seinem vorderen Ende ist er auf der dem Stützrad 10 gegenüberliegenden Fahrradseite über eine Halterung 12 lösbar unmittelbar oder mittelbar mit dem Fahrradrahmen 3 verbunden. Die Halterung 12 besteht dabei aus einer mit dem Fahrradrahmen 3 fest verbundenen Rohraufnahme 13, in oder über die der Verbindungslängsträger 11 mit Hilfe eines Rastverschlusses 14 lösbar gesteckt ist. Zugleich wird damit unter Bildung einer Schwenkachse 15 eine schwenkbare Verbindung zwischen dem Seitenwagen-Rahmen 9 und dem Fahrzeug-Rahmen 3 hergestellt. Die U-Rahmenbasis verläuft als Basisquerträger 16 hinter dem Hinterrad 7 zu der zweiten U-Rahmenschenkelanordnung als Stützradlängsträger 18. Als Unterbau für ein Kinderabteil 19 [Fig. 1] ist zwischen einem vorderen Bereich des Stützradlängsträgers 18 und dem Basisquerträger 16 ein Diagonalträger 20 vorgesehen [Fig. 2], der ggf. durch weitere [nicht dargestellte] Träger ergänzt werden kann.

Das Stützrad 10 ist etwa nur 2/3 so groß wie das Hinterrad 7, so daß der Basisquerträger 16 im Bereich des Hinterrads 7 nach unten etwa auf die Höhe der Stützradachse 17 abgekröpft ist. Wie aus Fig. 2 ersichtlich, liegen die Hinterradachse 21 und die Stützradachse 17 in einer Quervertikalebene 22.

Das Kinderabteil 19 oder ggf. eine Nutzfläche oder eine Funktionsbox sind im Bereich zwischen dem Stützrad 10 und dem Fahrrad 1 auf dem Seitenwagen-Rahmen 9 angebracht.

Der Stützradlängsträger 18 ist mehrteilig ausgebildet und besteht in einer Draufsicht aus einem durch zwei, etwa parallele Stützträgerlängsteile 23, 24 seitlich begrenzten Halterahmen 25. Das Stützrad 10 läuft zwischen diesen beiden Stützträgerlängsteilen 23, 24 [bei der ersten Ausführungsform nach den Fig. 1 und 2] in einem Schwenkrahmen 26, wobei die Stützradachse 17 an gegenüberliegenden Rahmenteilen 27, 28 des Schwenkrahmens 26 befestigt ist. Der seitenwagenäußere Rahmenteil 28 des Schwenkrahmens 26 bildet einen mittleren Teil des seitenwagenäußeren Stützradlängsträgerteils 24. Der Rahmenteil 28 ist dort mit in Längsrichtung abstehenden Verlängerungen 29, 30 in angrenzenden Trägerteilen des seitenwagenäußeren Stützradlängsträgerteils 24 eingesteckt. Dadurch wird eine in Längsrichtung ausgerichtete Stützrad-Schwenkachse 31 für eine schwenkbare Halterung des Stützrads 10 geschaffen.

Das hintere Querträgerteil 32 des Halterahmens 35 ist über eine Schraubverbindung 33 mit dem Basisquerträger 16 verbunden. Dadurch wird einerseits bei der Montage des Querträgerteils 32 die schwenkbare Steckverbindung zwischen dem Halterahmen 25 und dem Schwenkrahmen 26 herstellbar. Weiter kann bei einer Verstellmöglichkeit des Querträgerteils 32 in Querrichtung gegenüber dem Basisquerträger 16 beispielsweise über eine Langlochanordnung an der Schraubverbindung 33 in gewissen Grenzen die Vorspur des Stützrads 10 für eine Grundeinstellung eingestellt werden.

Zwischen dem Fahrradrahmen 3 und der schwenkbar gehaltenen Stützradachse 17 bzw. dem Schwenkrahmen 26 ist eine Neigungskoppeleinrichtung 34 angebracht [sh. Fig. 1; in Fig. 2 aus Gründen der Übersichtlichkeit weggelassen]. Die Neigungskoppeleinrichtung 34 besteht im wesentlichen aus einem Seilzug 35, der einerseits über eine nicht näher dargestellte Halteeinrichtung 36 lösbar in Hinterradachshöhe gegenüberliegend zur ersten Schwenkachse 15 mittelbar oder unmittelbar mit dem Fahrradrahmen 3 verbunden ist. Der Seilzug 35 ist ausgehend von der Halteeinrichtung 36 schräg nach unten über eine erste Rolle 37 und dann waagrecht unter dem Seitenwagen-Rahmen 9 zu einer zweiten Rolle 38 geführt und verläuft anschließend schräg nach oben zu einer Anschlußstelle 39 am seitenwageninneren Rahmenteil 27 des Schwenkrahmens 26. Durch diese Anbindung ist der Seilzug 35 indirekt mit dem seitenwageninneren Teil der schwenkbaren Stützradachse 17 verbunden. In einer Projektion auf die Fahrbahn 40 liegt die zweite Schwenkachse 31 um einen Abstand 41 seitlich weiter außen als der Radaufstandpunkt 42 des Stützrades 10. Dadurch wirkt bei belastetem Seitenwagen 2 auf das Stützrad 10 ein Drehmoment [Pfeil 43], das eine Spannkraft auf den Seilzug 35 bewirkt.

Die erste Ausführungsform des Gespanns hat folgende Funktion:

Bei einer Linkskurve hat der Gespannlenker in üblicher Weise das Fahrrad 1 und damit das Hinterrad 7 zum Ausgleich von Fliehkräften nach links geneigt. Durch die schwenkbare Verbindung an der Schwerkachse 15 folgt der Seitenwagen-Rahmen 9 dieser Neigung. Der Seilzug 35 wird dagegen durch ein Anheben der Halteeinrichtung 36 nach links gezogen, wodurch die Anschlußstelle 39 nach unten gegen das rückstellende Drehmoment [Pfeil 43] gezogen wird. Dieses seilspannende Drehmoment kann bei Bedarf durch den Einbau einer [nicht dargestellten] Federeinrichtung unterstützt werden. Damit ist durch den Seilzug der Schwenkrahmen 26 um die zweite Schwenkachse 31 nach unten verschwenkt worden, so daß die Neigung des Fahrrads 1, bzw. des Hinterrads 7 gleichgerichtet auf das Stützrad 10 gekoppelt worden ist. Bei einer Rechtskurve erfolgt die Kopplung in entgegengesetzter Richtung.

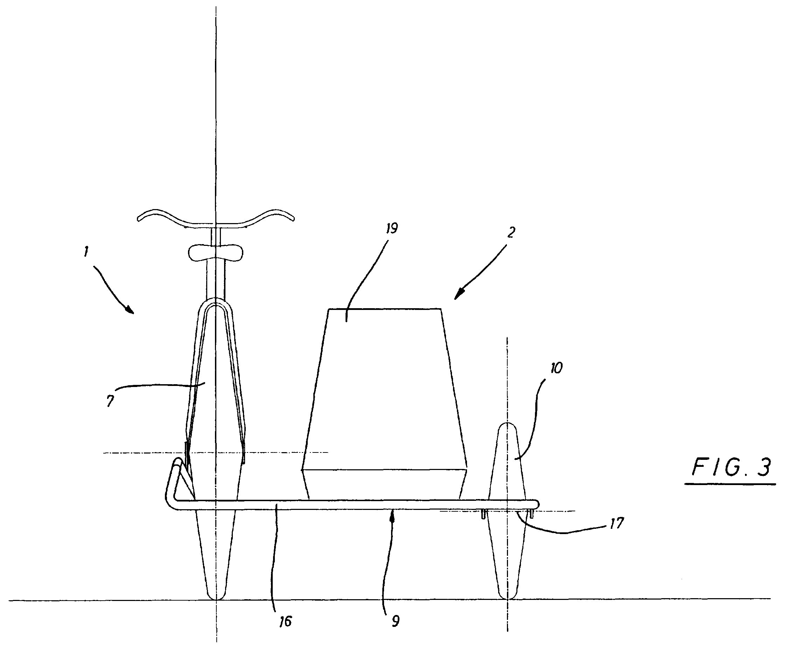

Die Fig. 3 bis 8 betreffen eine zweite Ausführungsform eines Gespanns, das im wesentlichen im Aufbau der ersten Ausführungsform eines Gespanns entspricht, so daß die dort verwendeten Bezugszeichen auch für die zweite Ausführungsform verwendet werden. Die zweite Ausführungsform unterscheidet sich von der ersten Ausführungsform darin, daß das Stützrad 10 am Stützradlängsträger 18 nicht schwenkbar sondern ortsfest gelagert ist und die Schwenkachse 15 eine Schrägstellung gegenüber der Fahrradlängsrichtung 44 und einer Horizontalebene 45 aufweist.

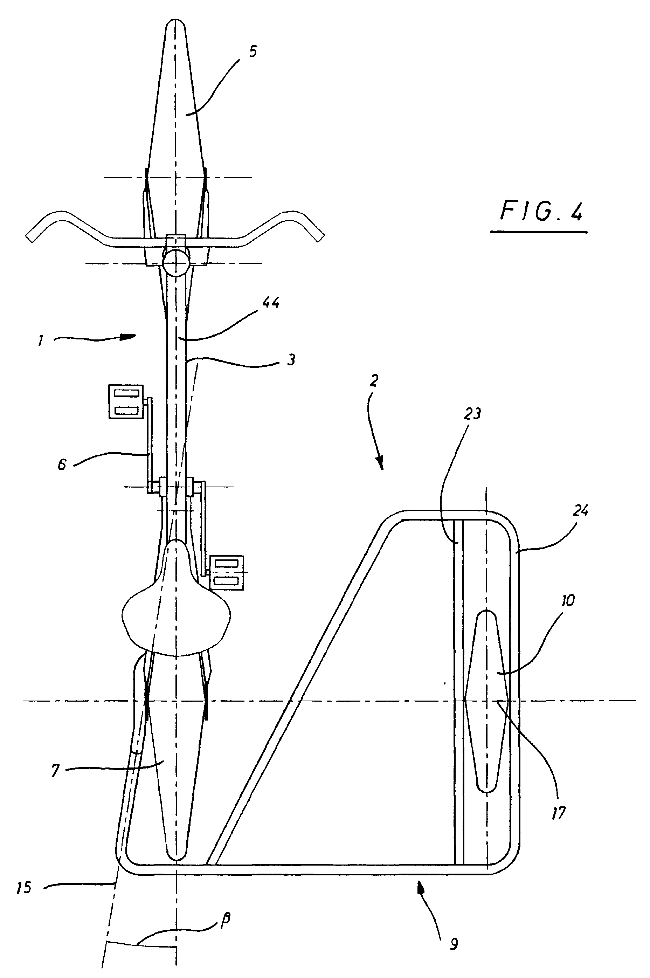

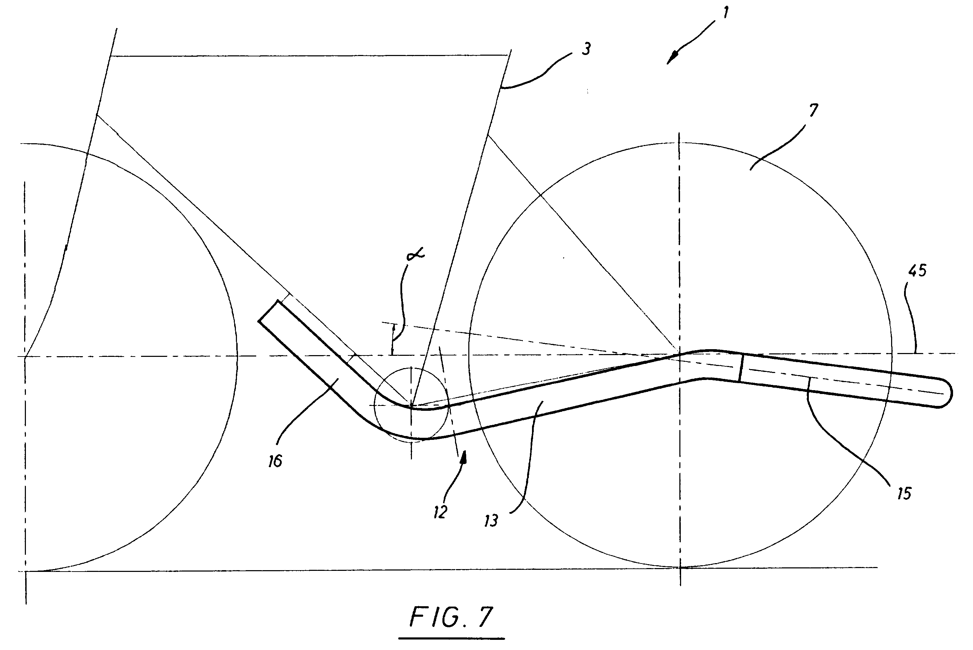

Die Schwerkachse 15 ist einerseits in einer Draufsicht entsprechend Fig. 4 um einen ersten Winkel [β] nach hinten außen gegenüber der Fahrradlängsrichtung 44 schräggestellt und zudem, wie aus der Seitenansicht nach Fig. 7 ersichtlich, um einen zweiten Winkel [α] nach hinten unten gegenüber der Horizontalebene 45 schräggestellt.

Weiter ist beispielsweise aus den Fig. 3 und 4 ersichtlich, daß das Stützrad 10 mit seiner Stützradachse 17 ortsfest zwischen den Stützradträgerlängsteilen 23, 24 am Seitenwagen-Rahmen 9 gelagert ist.

Aus der Seitendarstellung gemäß Fig. 7 ist eine bevorzugte Ausführungsform einer Halterung 12 zur erkennen, bei der eine Rohraufnahme 13 entlang einer Hinterradgabel bis weit nach vorne zu stabilen Rahmenteilen geführt und befestigt ist.

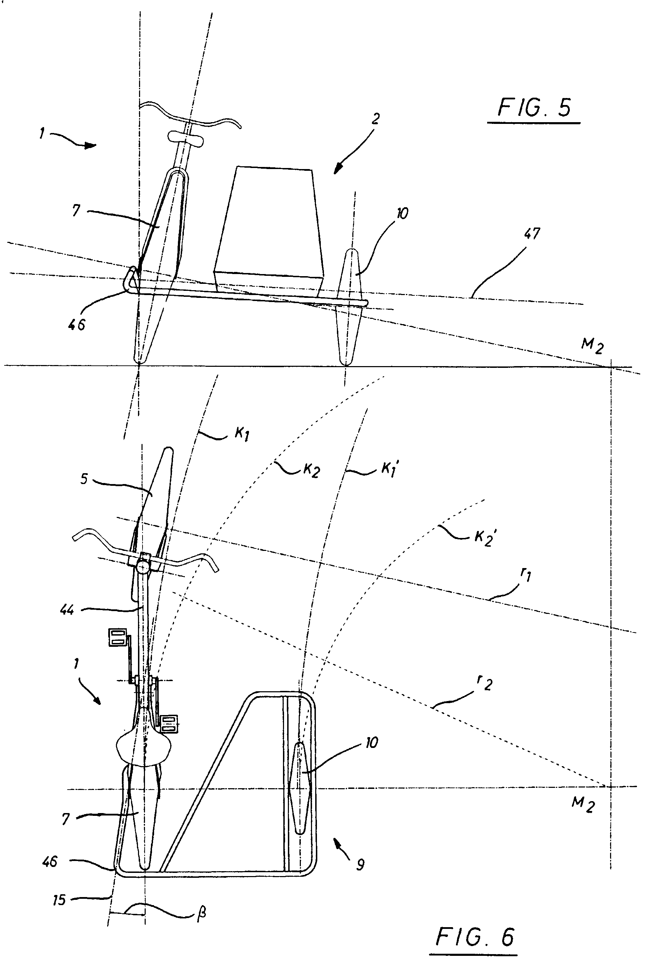

Anhand der Fig. 5, 6 und 8 wird die Fahrkinematik erläutert. Dazu werden Kurvenfahrten auf Kreisbögen betrachtet:

In Fig. 6 ist das Gespann nach Fig. 4 mit einem bestimmten Lenkeinschlag des Vorderrads 5 für eine Rechtskurve dargestellt. Bei einer starren Anordnung des Seitenwagen-Rahmens 9 am Fahrrad 1 [ohne Schwenkmöglichkeit um die Schwenkachse 15] würde das Hinterrad 7 auf einem Kreisbogen K1 und das Stützrad parallel dazu auf einem kleineren Kreisbogen K1' laufen, wobei die Kreisbögen den jeweils gleichen [nicht mehr auf dem Zeichenblatt befindlichen] Mittelpunkt aufweisen, zu dem ein Radiusstrahl r₁ eingezeichnet ist.

Durch die schwenkbare Befestigung des Seitenwagen-Rahmens 9 über die Schwenkachse 15 kann das Fahrrad 3 in der in Fig. 5 dargestellten Weise zum Ausgleich von Fliehkräften geneigt werden. Aufgrund dieser Neigung wird sowohl mit dem Hinterrad 7 als auch mit dem Stützrad 10 ein engerer Kreisbogen entsprechend K2 und K2' um einen Kreismittelpunkt M2 gefahren. Dabei wird durch die Seitenneigung bei der dargestellten Rechtskurve der hintere Schwenkachsenbereich 46 gegenüber der Grundstellung angehoben, wodurch der Seitenwagen 2 mit dem Kinderabteil 19 und dem Stützrad 10 zur Kurvenmitte hin geneigt wird [entsprechend der schräggestellten Linie 47]. Durch die zusammen mit der Neigung des Hinterrads 7 erfolgende gekoppelte Neigung des Stützrads 10 erfolgt eine Angleichung der zugeordneten Mittelpunktlagen, so daß Zwangskräfte reduziert werden.

Durch die Schrägstellung der Schwenkachse 15 um den Winkel [β] verläuft die Schwenkachse nach hinten außen, so daß der hintere Schwenkachsenbereich 46 relativ weit gegenüber der Fahrradlängsrichtung 44 nach seitlich außen versetzt liegt. Damit erfolgt bei einer Rechtskurvenfahrt eine vorteilhaft große Anhebung des hinteren Schwenkachsenbereichs. Bei Linkskurvenfahrten erfolgt entsprechend eine Linksneigung mit großer Absenkung des hinteren Schwenkachsenbereichs 46 und damit entgegengesetzte Schrägstellung des Seitenwagens 2, wodurch sich auch für Linksfahrten eine vorteilhafte Reduzierung von Zwangskräften ergibt.

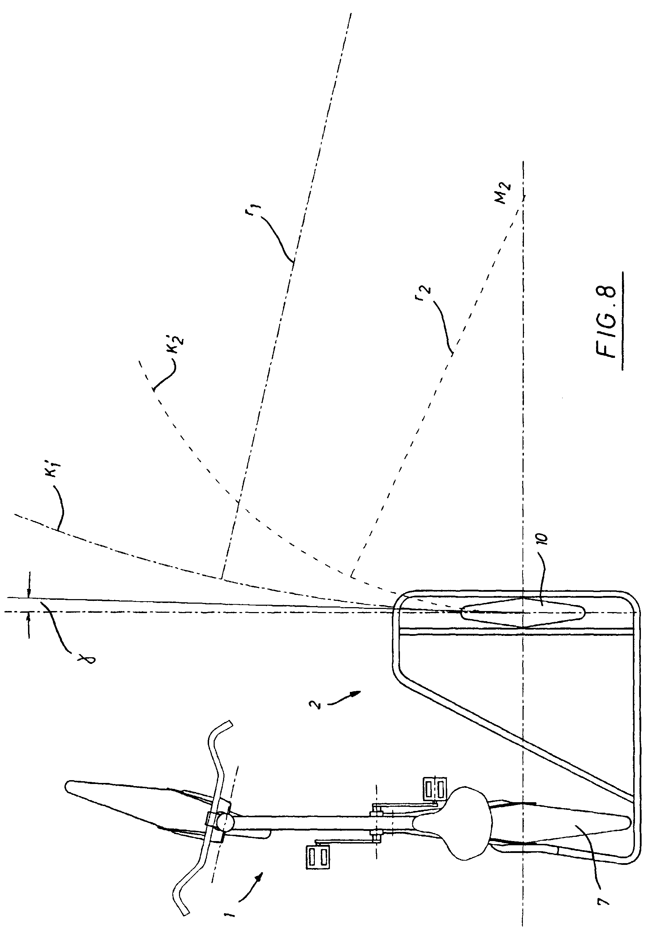

Fig. 8 entspricht der Darstellung nach Fig. 6, wobei auch in Fig. 8 die Kreisbögen K1' und K2' mit den zugeordneten Radien r₁ und r₂ eingezeichnet sind.

Durch die Neigung der Schwenkachse um den in Fig. 7 eingezeichneten Winkel [α] wird bei einer Rechtskurve und einer rechten Seitenneigung des Fahrrads 1 das Stützrad 10 um den in Fig. 8 eingezeichneten Vorhaltewinkel [γ] nach außen geschwenkt, wodurch weiter Zwangskräfte bei Kurvenfahrten [γ] reduziert werden, indem die Mittelpunktlagen der Kurvenbögen des Hinterrads 7 und des Stützrads 10 weiter angeglichen werden. Durch den dargestellten Vorhaltewinkel [γ] wird zudem vorteilhaft der Seitenwagen 2 bei Rechtskurven vom Fahrrad 1 etwas weggeschwenkt, so daß für den Gespannlenker insbesondere im Bereich der Pedalerie vorteilhaft mehr Platz geschaffen ist. Bei [nicht dargestellter] Linkskurvenfahrt stellt sich der Vorhaltewinkel [γ] lagerichtig zur anderen Seite hin ein und ergibt die entsprechenden Vorteile.

## Patentansprüche

1. Zweirad-Fahrzeug mit Seitenwagen, insbesondere Fahrrad mit Seitenwagen, bestehend aus
einem Zweirad-Fahrzeug [1] mit einem Zweirad-Rahmen (3) und mit einem Vorderrad [5] und Hinterrad [7], die in einer ersten Spur laufen und wovon vorzugsweise das Vorderrad [5] lenkbar ist,
einem Seitenwagen [2] mit einem Seitenwagen-Rahmen [9], an dem ein in einer zweiten Spur auf einer Stützradachse [7] laufendes Stützrad [10] angebracht ist und der Seitenwagen-Rahmen [9] mit dem Zweirad-Rahmen [3] über eine im wesentlichen in Fahrzeuglängsrichtung verlaufende Schwenkachse [15] schwenkbar verbunden ist,
dadurch gekennzeichnet,
daß die Schwenkachse [15] an der dem Stützrad [10] gegenüberliegenden Zweirad-Fahrzeugseite liegt.

2. Zweirad-Fahrzeug nach Anspruch 1, dadurch gekennzeichnet, daß die Schwenkachse [15] in einer Draufsicht um einen ersten Winkel [β] nach hinten seitlich außen schräggestellt zur Fahrzeuglängsrichtung [44] verläuft.

3. Zweirad-Fahrzeug nach Anspruch 1 oder Anspruch 2, dadurch gekennzeichnet, daß die Schwenkachse [15] in einer Seitenansicht um einen zweiten Winkel [α] nach hinten unten schräggestellt zu einer Horizontalebene [45] verläuft.

4. Zweirad-Fahrzeug nach einem der Ansprüche 1 bis 3, dadurch gekennzeichnet,
daß die quer zur Fahrtrichtung liegende Stützradachse [17] mit dem Zweirad-Rahmen [3] über eine in Fahrzeuglängsrichtung verlaufende Stützrad-Schwenkachse [31] schwenkbar direkt oder indirekt verbunden ist, und
daß eine Neigungskoppeleinrichtung [34] zwischen dem Zweirad-Fahrzeug [1] und dem Stützrad [10] vorgesehen ist, welche Kraftübertragungsmittel [35] umfaßt, die einerseits mit dem Zweirad-Rahmen (3) und andererseits mit der schwenkbaren Stützradachse [17] zu deren Verschwenkung direkt oder indirekt verbunden sind dergestalt, daß eine Neigung des Zweirad-Fahrzeugs [1] gleichgerichtet auf das Stützrad [10] gekoppelt wird.

5. Zweirad-Fahrzeug nach einem der Ansprüche 1 bis 4, dadurch gekennzeichnet,
daß der Seitenwagen-Rahmen [9] in einer Draufsicht von oben die Grundstruktur einer U-Rahmenform mit in Fahrzeuglängsrichtung nach vorne ausgerichteten U-Rahmenschenkeln aufweist,
daß ein U-Rahmenschenkel als Verbindungslängsträger [11] des Seitenwagen-Rahmens [9] an der dem Stützrad [10] gegenüberliegenden Zweirad-Fahrzeugseite etwa im Höhenbereich der Hinterradachse mit dem Zweirad-Rahmen [3] über eine Halterung [12] und dort um die im wesentlichen in Fahrzeuglängsrichtung verlaufende Schwenkachse [15] schwenkbar verbunden ist,
daß am zweiten U-Rahmenschenkel als Stützradlängsträger [18] die Stützradachse [17] verbunden ist,
daß die Hinterradachse [21] und die Stützradachse [17] etwa in einer Quervertikalebene [22] liegen, und
daß die U-Rahmenbasis als Basisquerträger [16] hinter dem Hinterrad [7] verläuft und im Bereich zwischen dem Hinterrad [7] und dem Stützrad [10] am Seitenwagen-Rahmen [9] eine Nutzfläche und/oder ein Nutzaufbau [19] angebracht sind.

6. Zweirad-Fahrzeug nach einem der Ansprüche 1 bis 5, dadurch gekennzeichnet, daß das Zweirad-Fahrzeug ein Fahrrad [1] ist.

7. Zweirad-Fahrzeug nach Anspruch 5 oder Anspruch 6, dadurch gekennzeichnet, daß die Halterung [12] für den Verbindungslängsträger [11] aus einer in Fahrzeuglängsrichtung ausgerichteten, etwa in Achshöhe des Hinterrads [7], vorzugsweise etwas darüberliegend fest mit dem Zweirad-Rahmen [3] und/oder der Hinterradachse [21] verbundenen Rohraufnahme [13] besteht, in die oder über die der Verbindungslängsträger [11] durch einen Rastverschluß [14] lösbar und unter Bildung der Schwenkachse [15] schwenkbar gesteckt ist.

8. Zweirad-Fahrzeug nach einem der Ansprüche 5 bis 7, dadurch gekennzeichnet, daß der Stützradlängsträger [18] aus zwei beabstandeten und etwa parallel verlaufenden Stützradlängsträgerteilen [23, 24] besteht, die an ihren Endseiten in einer Draufsicht zu einem Halterahmen [25] mit Querträgerteilen verbunden sind.

9. Zweirad-Fahrzeug nach einem der Ansprüche 5 bis 8, dadurch gekennzeichnet, daß das Stützrad [10] kleiner, vorzugsweise etwa 2/3 so groß wie das Hinterrad [7] ist und der Basisquerträger [16] im Bereich [21] des Hinterrads [7] nach unten auf Stützradachshöhe abgekröpft ist.

10. Zweirad-Fahrzeug nach einem der Ansprüche 1 bis 9, dadurch gekennzeichnet, daß der Seitenwagen [2] um seine Schwenkachse [15] um etwa 90° hochklappbar ist und mit einer lösbaren Fixereinrichtung am Zweirad-Rahmen [3] in der hochgeklappten Position festlegbar ist.
